# EUROPÄISCHE PATENTSCHRIFT

(11) **EP 1 048 889 B1**
(45) Veröffentlichungstag und Bekanntmachung des Hinweises auf die Patenterteilung: **12.03.2008**
(21) Anmeldenummer: 00890127.4
(22) Anmeldetag: 25.04.2000
(51) Int. Cl.: F16L 59/06, F16L 59/08, F16L 59/02

(54) **Isolierung für ein Leitungsrohr oder ein Rohrformstück**
Insulation for a pipe or a pipe-fitting
Isolation pour une canalisation ou une pièce de tuyauterie

(30) Priorität: 27.04.1999 AT 73999
(43) Veröffentlichungstag der Anmeldung: 02.11.2000
(73) Patentinhaber: KE-KELIT Kunststoffwerk Gesellschaft m.b.H., A-4017 Linz (AT)
(72) Erfinder: Rametsteiner, Karl, 4040 Linz (AT)
(74) Vertreter: Hübscher, Helmut

(56) Entgegenhaltungen:
- EP-A- 0 698 482
- DD-A- 247 586

## Beschreibung

Die Erfindung bezieht sich auf ein werkseitig vorgefertigtes, mit einer Isolierung versehenes Leitungsrohr oder Rohrformstück gemäß dem Oberbegriff des Anspruchs 1.

Nachträglich auf ein Rohr aufschiebbare Isolierungen (DD 247 586 A3, EP 698 482 A2) sind bekannt, dienen insbesondere der Wärme- sowie der Schalldämmung und bestehen aus einem Schaumstoffmantel, der zur Erleichterung des Aufbringens auf ein Leitungsrohr und zur Verbesserung der Isolierwirkung parallel zur Rohrlängsachse verlaufende Rillen aufweist, sodaß der auf das Leitungsrohr aufgebrachte Schaumstoffmantel nur stellenweise am Leitungsrohr anliegt. Da diese mit einer Metallfolie umhüllte Isolierhülse nachträglich auf das Rohr aufgeschoben wird, ergibt sich keine Notwendigkeit, ein Isolierhülsenende gegenüber dem anschließenden Abschnitt der Isolierhülse zu verschieben, und ergeben sich keine Schwierigkeiten beim Verbinden der einzelnen Leitungsrohre untereinander bzw. beim Verbinden von Leitungsrohren mit Formstücken.

Um mit einer Isolierung versehene Leitungsrohre mit anderen Leitungsrohren oder Rohrformstücken durch ein Schweißen, Pressen, Schrauben oder Kleben verbinden zu können, muß zunächst im Bereich des jeweiligen Verbindungsendes das Leitungsrohr bzw. das Formstück von der aus einem Schaumstoffmantel aus Kunststoff bestehenden Isolierung befreit werden. Zu diesem Zweck ist es bekannt (AT 002 437 U1), die am Leitungsrohr anliegende Fläche dickerer Schaumstoffmäntel zu profilieren, so daß der Schaumstoffmantel nur stellenweise am Leitungsrohr anliegt, was das teilweise axiale Verschieben des Schaumstoffmantels entlang des Leitungsrohres im abzuisolierenden Verbindungsbereich erheblich erleichtert. Die mit dem Zurückschieben der Isolierung verbundene elastische Verformung des Schaumstoffmantels sichert zwar ein Rückstellen der Isolierung in ihre Ausgangslage, doch zwingt sie auch dazu, den zurückgeschobenen Schaumstoffmantel in der Rückziehstellung festzuhalten, damit die notwendigen Verbindungsmaßnahmen getroffen werden können. Wird der von einem Rohrende zurückgeschobene Schaumstoffmantel von Hand aus festgehalten, so erschwert sich die Handhabung, weil der zurückgeschobene Schaumstoffmantel nicht ohne weiteres zwischenzeitlich freigegeben werden kann. Außerdem ist zum Festhalten des zurückgeschobenen Schaumstoffmantels ein entsprechender Kraftaufwand erforderlich. Wird das händische Festhalten des zurückgeschobenen Schaumstoffmantels durch eine Klemmeinrichtung, beispielsweise eine Klemmanschette, vermieden, so vergrößert sich der Arbeitsaufwand durch die zusätzlich erforderlichen Klemmeinrichtungen.

Ähnliche Schwierigkeiten treten bei der werkseitigen Herstellung von Isolierungen von Rohrformstücken auf, wenn der Schaumstoffmantel aus zwei oder mehreren an die Außenform des Rohrformstückes anzupassenden Teilen zusammengesetzt wird, weil die zur Anpassung an die Außenform des Formstückes erforderliche Verformung der Teile des Schaumstoffmantels zumindest bis zum Verbinden der Mantelteile festgehalten werden muß.

Der Erfindung liegt somit die Aufgabe zugrunde, ein werkseitig vorgefestigtes, mit einer Isolierung versehenes Leitungsrohr oder Rohrformstück, insbesondere für Hausinstallationen, der eingangs geschilderten Art so auszugestalten, daß der zusätzliche Aufwand zum Festhalten des elastisch verformten Schaumstoffmantels bzw. von dessen elastisch verformten Teilen vermieden werden kann, ohne auf ein mögliches abschnittsweises Verschieben des Schaumstoffmantels entlang der Leitungsrohre bzw. Formstücke verzichten zu müssen.

Die Erfindung löst die gestellte Aufgabe durch, die im Anspruch 1 enthaltenen Merkmale

Durch die Profilierung der Schaumstoffmantelinnenseite mit in Umfangsrichtung gegeneinander auf Lücke versetzten Noppen und die biegeweiche, mit dem Schaumstoffmantel schubfest verbundene metallische Schicht, die bei einem abschnittsweisen Verschieben des Schaumstoffmantels entlang eines Leitungsrohres mit dem Schaumstoffmantel mitverformt wird, kann in einfacher Weise die zurückgeschobene Lage des Schaumstoffmantels ohne zusätzliche äußere Krafteinflüsse festgehalten werden, weil der Formänderungswiderstand der plastisch verformten, metallischen Schicht einer elastischen Rückstellung des Schaumstoffmantels in seine Ausgangslage entgegensteht. Zum Rückstellen des Schaumstoffmantels ist folglich der Schaumstoffmantel unter einer Rückverformung der biegeweichen metallischen Schicht in seine Ausgangsstellung zu verschieben. Durch diese einfache Maßnahme kann somit die Handhabung von vorgefertigten, mit einer Isolierung versehenen Leitungsrohren oder Formstücken erheblich vereinfacht werden. Dazu kommt, daß mit Hilfe der biegeweichen metallischen Schicht der Schaumstoffmantel in vorteilhafter Weise bleibend an die Außenform eines Rohrformstückes angepaßt werden kann, was die Herstellung mehrteiliger Schaumstoffmäntel für die werkseitige Isolierung von Rohrformstücken erheblich erleichtert, weil die Verbindung dieser bleibend verformten Mantelteile keine Schwierigkeiten mehr bereitet.

Die biegeweiche metallische Schicht kann unterschiedlich aufgebaut sein. So ergeben sich beispielsweise besonders einfache Konstruktionsverhältnisse, wenn die metallische Schicht aus einer gegebenenfalls durchbrochenen Metallfolie, vorzugsweise aus einer Aluminiumfolie, mit einer Dicke von 0,01 bis 0,2 mm besteht. Trotz der vergleichsweise geringen Dicke dieser Metallfolie kann der elastischen Rückstellkraft des Schaumstoffmantels ein ausreichender Widerstand entgegengesetzt werden, um eine unbeabsichtigte Verlagerung des Schaumstoffmantels ausschließen zu können. Um eine ausreichende Haftverbindung zwischen der Metallfolie und dem Schaumstoffmantel zu sichern, empfiehlt sich das Vorsehen einer entsprechenden Bindeschicht zwischen der Metallfolie und dem Schaumstoffmantel, insbesondere bei nicht durchbrochenen, durchgehenden Metallfolien.

Eine andere Möglichkeit der Ausbildung der metallischen Schicht besteht darin, ein Drahtgitter oder Drahtgewebe vorzusehen, dessen schubfeste Verbindung mit dem Schaumstoffmantel unter Umständen einfacher ist. Ein solches Drahtgitter oder -gewebe eignet sich besonders für das Verformen von Mantelteilen zur Anpassung an die Außenform von Rohrformstücken. Es ist lediglich für einen ausreichend biegeweichen Draht zu sorgen. Zu diesem Zweck können weichgeglühte Stahldrähte oder Kupferdrähte eingesetzt werden. Die Maschenweite solcher Drahtgitter oder -gewebe kann vorteilhaft 1 bis 10 mm betragen. Weisen die Drähte einen Durchmesser von 0,1 bis 1 mm auf, so kann den unterschiedlichsten Verhältnissen Rechnung getragen werden. Es kommt ja immer darauf an, durch das Drahtgitter oder -gewebe einen Formänderungswiderstand sicherzustellen, der im Bereich der elastischen Rückstellkraft des Schaumstoffmantels liegt, um ein unbeabsichtigtes Rückstellen des Schaumstoffmantels zufolge seiner Eigenelastizität zu unterbinden.

Die metallische Schicht kann je nach Anwendungsfall auf der Innen- oder Außenseite des Schaumstoffmantels vorgesehen werden. Es ist aber selbstverständlich auch möglich, die metallische Schicht in den Schaumstoffmantel einzubetten. Liegt die metallische Schicht auf der Außenseite des Schaumstoffmantels, so kann die metallische Schicht zusätzlich durch eine Schutzschicht aus Kunststoff abgedeckt werden, um die metallische Schicht vor mechanischen Beschädigungen zu bewahren. In diesem Zusammenhang ist ja zu bedenken, daß die Eigenfestigkeit der metallischen Schicht klein ausfallen kann.

Mit der schubfest mit dem Schaumstoffmantel verbundenen, biegeweichen metallischen Schicht wird eine gegen ein freies elastisches Rückstellen gesicherte Teilverschiebung des Schaumstoffmantels gegenüber dem durch ihn isolierten Leitungsrohr oder Formstück möglich. Außerdem werden vorteilhafte Voraussetzungen geschaffen, um beispielsweise isolierte Kunststoffrohre elektrisch zu orten oder elektrische Abschirmungen zu erhalten.

In der Zeichnung ist der Erfindungsgegenstand beispielsweise dargestellt. Es zeigen
- Fig. 1: ein vorgefertigtes, mit einer erfindungsgemäßen Isolierung versehenes Leitungsrohr ausschnittsweise in einer zum Teil aufgerissenen Seitenansicht,
- Fig. 2: dieses Leitungsrohr in einem Schnitt nach der Linie II-II der Fig. 1,
- Fig. 3: einen Schnitt durch die metallische Schicht an der Außenseite des Schaumstoffmantels in einem vergrößerten Maßstab und
- Fig. 4: das Leitungsrohr mit der im Endbereich zurückgeschobenen Isolierung in einer Seitenansicht.

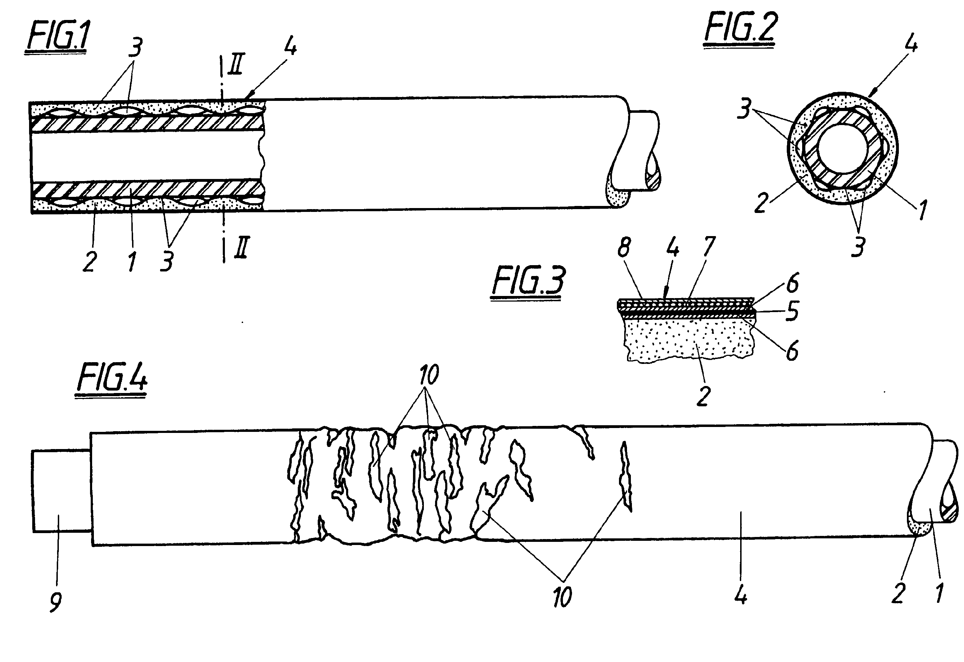

Gemäß dem dargestellten Ausführungsbeispiel weist das Leitungsrohr 1 aus Kunststoff eine Isolierung aus einem Schaumstoffmantel 2, beispielsweise aus geschlossenzelligem, vernetztem Polyäthylen mit einem Raumgewicht von 30 kg/m³ auf. Die Innenseite dieses Schaumstoffmantels 2 ist mit einer Profilierung in Form von Noppen 3 versehen, die in Umfangsrichtung gegeneinander auf Lücke versetzt sind, um den Schaumstoffmantel 2 auf dem Leitungsrohr 1 abschnittsweise verschieben zu können. Auf dem Schaumstoffmantel 2 ist außen eine metallische Schicht 4 vorgesehen, die gemäß der Fig. 3 aus einer Aluminiumfolie 5 besteht, die über eine Bindeschicht 6 beispielsweise aus modifiziertem Polyäthylen niedriger Dichte mit einem Flächengewicht von 30 g/m² schubfest mit dem Schaumstoffmantel 2 verbunden ist. Zum Schutz dieser Aluminiumfolie 5 weist die metallische Schicht 4 eine über eine weitere Bindeschicht 6 mit der Aluminiumfolie 5 verbundene Gewebeschicht 7 aus verstreckten Folienbändern aus Polyäthylen hoher Dichte auf, welche Gewebeschicht 7 durch eine Kunststoffschicht 8 abgedeckt ist, die aus Polyäthylien niedriger Dichte bestehen kann. Diese schubfest mit dem Schaumstoffmantel 2 verbundene, durch die Gewebeschicht 7 mechanisch geschützte Aluminiumfolie, die eine Dicke von beispielsweise 0,015 mm aufweisen kann, wird in einfacher Weise eine elastische Rückstellung des Schaumstoffmantels 2 nach einem Rückschieben beispielsweise vom Verbindungsende 9 des Leitungsrohres 1 vermieden, wie dies in der Fig. 4 angedeutet ist. Die plastische Verformung der biegeweichen metallischen Schicht 4 setzt nämlich der elastischen Rückstellung einen ausreichenden Widerstand entgegen. Die metallische Schicht 4 wird beim Zurückschieben des Schaumstoffmantels vom Verbindungsende 9 mit dem Schaumstoffmantel faltenbildend mitverformt, wie dies in der Fig. 4 durch die Falten 10 angedeutet ist. Der zum Ausgleichen dieser Falten 10 zu überwindende Formänderungswiderstand der metallischen Schicht 4 ist ausreichend groß, um die elastische Rückstellung des Schaumstoffmantels 2 in seine Ausgangslage gemäß der Fig. 1 zu verhindern. Das von der Isolierung freigelegte Verbindungsende 9 der Leitungsrohr 1 kann demnach entsprechend bearbeitet und mit einem weiteren Leitungsrohr oder einem Rohrformstück verbunden werden, bevor die Isolierung in die Ausgangslage nach der Fig. 1 verschoben wird. Zu diesem Zweck ist der Schaumstoffmantel 2 mit der metallischen Schicht 4 über das freigelegte Verbindungsende 9 unter einem Ausgleichen der Falten 10 vorzuschieben. Dies ist ohne besonderen Kraftaufwand möglich, weil der Formänderungswiderstand der metallischen Schicht 4 gerade ein elastisches Rückstellen des Schaumstoffmantels 2 verhindern soll.

## Patentansprüche

1. Werkseitig vorgefertigtes, mit einer Isolierung versehenes Leitungsrohr oder Rohrformstück, insbesondere für Hausinstallationen, wobei die Isolierung aus einem auf das Leitungsrohr oder das Formstück aufgebrachten Schaumstoffmantel besteht, der innenseitig eine am Leitungsrohr oder Formstück nur stellenweise anliegende Profilierung mit in Umfangsrichtung gegeneinander auf Lücke versetzten Noppen aufweist, **dadurch gekennzeichnet, daß** der werkseitig auf das Leitungsrohr oder Formstück aufgebrachte Schaumstoffmantel (2) mit einer biegeweichen metallischen Schicht (4) versehen ist und daß die biegeweiche, mit dem Schaumstoffmantel (2) schubfest haftverbundene metallische Schicht (4) einen Formänderungswiderstand aufweist, der größer als die elastische Rückstellkraft des Schaumstoffmantels ist, um eine elastische Rückstellung des Schaumstoffmantels (2) in seine Ausgangslage nach einem abschnittsweisen Verschieben des Schaumstoffmantels (2) entlang des Leitungsrohres oder des Rohformstückes aus der Ausgangslage zu verhindern.

2. Isolierung nach Anspruch 1, **dadurch gekennzeichnet, daß** die metallische Schicht (4) aus einer gegebenenfalls durchbrochenen Metallfolie, vorzugsweise aus einer Aluminiumfolie (5), mit einer Dicke von 0,01 bis 0,2 mm besteht.

3. Isolierung nach Anspruch 2, **dadurch gekennzeichnet, daß** zwischen der Metallfolie und dem Schaumstoffmantel (2) eine Bindeschicht (6) vorgesehen ist.

4. Isolierung nach Anspruch 1, **dadurch gekennzeichnet, daß** die metallische Schicht (4) aus einem Drahtgitter oder Drahtgewebe besteht.

5. Isolierung nach Anspruch 4, **dadurch gekennzeichnet, daß** das Drahtgitter oder - gewebe aus weichgeglühtem Stahldraht oder Kupferdraht gefertigt ist.

6. Isolierung nach Anspruch 4 oder 5, **dadurch gekennzeichnet, daß** das Drahtgitter oder -gewebe mit einer Maschenweite von 1 bis 10 mm aus Draht mit einem Durchmesser von 0,1 bis 1 mm gefertigt ist.

7. Isolierung nach einem der Ansprüche 1 bis 6, **dadurch gekennzeichnet, daß** die metallische Schicht (4) den Schaumstoffmantel (2) umschließt und durch eine Schutzschicht aus Kunststoff abgedeckt ist.

## Claims

1. Conduit pipe or pipe fitting, in particular for domestic installations, which is factory-prefabricated and is provided with an insulation, wherein the insulation consists of a foamed sheath which is applied to the conduit pipe or the fitting and which on the inner side comprises a profile which lies against the conduit pipe or fitting only at certain points and has burls which are offset with respect to each other in the peripheral direction with a gap, **characterised in that** the foamed sheath (2) which is applied factory-side to the conduit pipe or fitting is provided with a flexible metallic layer (4) and that the flexible metallic layer (4) which is adhesively connected in shear-resistant manner to the foamed sheath (2) has a resistance to deformation which is greater than the elastic restoring force of the foamed sheath, in order to prevent the foamed sheath (2) from being returned in an elastic manner to its initial position after displacement in sections of the foamed sheath (2) along the conduit pipe or the pipe fitting from the initial position.

2. Insulation as claimed in claim 1, **characterised in that** the metallic layer (4) consists of an optionally perforated metal foil, preferably an aluminium foil (5), having a thickness of 0.01 to 0.2 mm.

3. Insulation as claimed in claim 2, **characterised in that** a bonding layer (6) is provided between the metal foil and the foamed sheath (2).

4. Insulation as claimed in claim 1, **characterised in that** the metallic layer (4) consists of a wire grating or wire cloth.

5. Insulation as claimed in claim 4, **characterised in that** the wire grating or wire cloth is manufactured from soft-annealed steel wire or copper wire.

6. Insulation as claimed in claim 4 or 5, **characterised in that** the wire grating or wire cloth is manufactured with a mesh aperture of 1 to 10 mm from wire having a diameter of 0.1 to 1 mm.

7. Insulation as claimed in any one of claims 1 to 6, **characterised in that** the metallic layer (4) surrounds the foamed sheath (2) and is covered by a protective synthetic material layer.

## Revendications

1. Canalisation ou pièce de forme de tuyauterie préfabriquée en usine, munie d'une isolation, en particulier pour des installations domestiques, l'isolation étant composée d'une enveloppe en matériau alvéolaire, appliquée sur la canalisation ou la pièce de forme de tuyauterie, enveloppe présentant, côté intérieur, un profilage en appui, uniquement par endroits, sur la canalisation ou la pièce de forme, avec des tétons, implantés en direction périphérique avec des intervalles entre eux, **caractérisée en ce que** l'enveloppe en matériau alvéolaire (2), appliquée en usine sur la canalisation ou la pièce de forme, est munie d'une couche (4) métallique présentant une souplesse en flexion, et **en ce que** la couche (4) métallique, présentant une souplesse en flexion, reliée par adhésion, de façon rigide contre le coulissement, à l'enveloppe en matériau alvéolaire (2) présente une résistance à la modification de forme supérieure à la force de rappel élastique de l'enveloppe en matériau alvéolaire, pour empêcher un rappel élastique de l'enveloppe en matériau alvéolaire (2) à sa position initiale, après avoir effectué un déplacement relatif, degré par degré, de l'enveloppe en matériau alvéolaire (2) le long de la canalisation ou de la pièce de forme de tuyauterie, déplacement lui ayant fait quitter la position initiale.

2. Isolation selon la revendication 1, **caractérisée en ce que** la couche (4) métallique est composée d'une feuille métallique, le cas échéant ajourée, de préférence, composée d'une feuille d'aluminium (5) d'une épaisseur de 0,01 à 0,2 mm.

3. Isolation selon la revendication 2, **caractérisée en ce qu'**une couche de liaison (6) est prévue, entre la feuille métallique et l'enveloppe en matériau alvéolaire (2).

4. Isolation selon la revendication 1, **caractérisée en ce que** la couche métallique (4) est composée d'un grillage en fil ou d'un textile en fil.

5. Isolation selon la revendication 4, **caractérisée en ce que** le grillage en fil ou le textile en fil est fabriqué en un fil d'acier ou d'un fil de cuivre, ayant subi un recuit d'adoucissement.

6. Isolation selon la revendication 4 ou 5, **caractérisée en ce que** le grillage en fil ou le textile en fil est fabriqué avec une largeur de maille de 1 à 10 mm, en fil d'un diamètre de 0,1 à 1 mm.

7. Isolation selon l'une des revendications 1 à 6, **caractérisée en ce que** la couche (4) métallique entoure l'enveloppe en matériau alvéolaire (2) et est couverte par une couche de protection en matière synthétique.
